# FASCICULE DE BREVET EUROPEEN

(11) **EP 4 180 334 B1**
(45) Date de publication et mention de la délivrance du brevet: **09.10.2024**
(21) Numéro de dépôt: 22205880.2
(22) Date de dépôt: 07.11.2022
(51) Int. Cl.: B64D 41/00

(54) **GROUPE AUXILIAIRE DE PUISSANCE POUR UN AÉRONEF**
HILFSTRIEBWERK FÜR EIN FLUGZEUG
AUXILIARY POWER UNIT FOR AN AIRCRAFT

(30) Priorité: 10.11.2021 FR 2111968
(43) Date de publication de la demande: 17.05.2023
(73) Titulaire: Airbus Operations (S.A.S.), 31060 Toulouse Cedex 9 (FR); Airbus SAS, 31700 Blagnac (FR); Airbus Operations GmbH, 21129 Hamburg (DE)
(72) Inventeur: JOSSET, Thomas, 31060 TOULOUSE (FR); POIRIER, Didier, 31700 BLAGNAC Cedex (FR); BAMMANN, Holger, 21129 HAMBURG (DE); SCHERER, Thomas, 21129 HAMBURG (DE)
(74) Mandataire: Cabinet Le Guen Maillet

(56) Documents cités:
- EP-A1- 3 182 490
- GB-A- 2 522 865
- US-A1- 2019 252 696
- US-A1- 2019 393 531
- US-A1- 2020 391 876

## Description

### DOMAINE TECHNIQUE

Au moins un mode de réalisation concerne un groupe auxiliaire de puissance pour un aéronef comprenant un compresseur d'air couplé à un dispositif de prélèvement d'air à l'extérieur de l'aéronef. Au moins un autre mode de réalisation concerne un aéronef comprenant un tel groupe auxiliaire de puissance.

### ETAT DE LA TECHNIQUE ANTERIEURE

Dans le domaine de l'aéronautique, un groupe auxiliaire de puissance ou APU (acronyme anglais de « auxiliary power unit ») désigne un groupe auxiliaire qui fournit de l'énergie pour des fonctions autres que la propulsion. Notamment, il est destiné à produire une énergie électrique et une énergie pneumatique (énergie emmagasinée dans un gaz comprimé) à bord des aéronefs pour alimenter au sol les différents systèmes de bord (e.g. système d'éclairage de la cabine, climatisation, ventilation, etc) quand les systèmes de propulsion principaux sont à l'arrêt afin d'économiser le carburant. L'énergie pneumatique ainsi produite est également utilisée pour démarrer les systèmes de propulsion de l'aéronef. Un tel groupe auxiliaire de puissance peut également être utilisé en vol.

Les groupes auxiliaires de puissance sont généralement positionnés à l'arrière de l'aéronef dans le cône de queue afin de réduire leur impact sonore pour les passagers. Ils sont alimentés avec le kérosène des réservoirs de l'aéronef. Ainsi, les groupes auxiliaires de puissance consomment une partie du kérosène de l'aéronef et contribuent aux émissions de gaz à effet de serre de l'aviation.

Une nouvelle génération d'aéronefs fonctionnant au dihydrogène est en train de se développer. Ces nouveaux aéronefs sont moins polluants car rejetant essentiellement de la vapeur d'eau. Dès lors, alimenter un groupe auxiliaire de puissance dans de tels aéronefs avec du kérosène serait incohérent pour des questions environnementales. Alimenter le groupe auxiliaire de puissance avec du dihydrogène nécessiterait la mise en place d'un circuit d'alimentation en dihydrogène entre la queue de l'aéronef et le réservoir de dihydrogène généralement situé à proximité des ailes de l'aéronef. Une telle architecture poserait des problèmes de sécurité liés aux risques de fuite de dihydrogène et d'explosion le long du circuit d'alimentation en dihydrogène.

Il est donc souhaitable de fournir une solution qui pallie ces différents inconvénients de l'état de la technique. Plus particulièrement, il est souhaitable de fournir une solution d'alimentation électrique et pneumatique de fonctions non-propulsives à bord d'un aéronef qui soit peu polluante, peu bruyante et sûre.

Le document US2019/393531A1 décrit un groupe auxiliaire de puissance comprenant un moteur électrique alimenté par un ensemble de piles à combustible et entraînant un compresseur dont une sortie peut être couplée à un système de conditionnement d'air de l'aéronef par l'intermédiaire d'une vanne. Les piles à combustible sont traversées par un flux d'air en amont d'une entrée du compresseur.

### EXPOSE DE L'INVENTION

Au moins un mode de réalisation concerne un groupe auxiliaire de puissance pour un aéronef comprenant un compresseur d'air couplé à un dispositif de prélèvement d'air à l'extérieur de l'aéronef. Le compresseur alimente en air comprimé un distributeur d'air configuré pour alimenter en air un système de contrôle environnemental et un module de démarrage d'au moins un système de propulsion de l'aéronef alimenté en hydrogène depuis un réservoir. Le distributeur d'air est en outre configuré pour alimenter en air un ensemble de piles à combustible agencé pour réaliser une fonction de génération électrique destinée à alimenter des systèmes non propulsifs de l'aéronef, ledit ensemble de piles à combustible étant en outre alimenté en hydrogène depuis ledit réservoir.

De façon avantageuse, une entrée dudit distributeur d'air est couplée à une sortie d'un système de prélèvement d'air configuré pour prélever de l'air au niveau dudit au moins un système de propulsion et le distributeur d'air est contrôlé par une unité de traitement de sorte que, lorsque ledit système de propulsion fonctionne, le distributeur d'air alimente l'ensemble de piles à combustible et le système de contrôle environnemental d'un mélange d'air en provenance du compresseur et du système de propulsion.

Selon un mode de réalisation particulier, l'unité de traitement est en outre configurée pour commander l'arrêt du compresseur pendant le fonctionnement du système de propulsion, en particulier pendant des phases de vol de l'aéronef au cours desquelles le débit d'air prélevé au niveau dudit au moins un système de propulsion est suffisant pour alimenter en air pressurisé l'ensemble de piles à combustible et le système de contrôle environnemental.

Selon un mode de réalisation particulier, l'ensemble de piles à combustible est couplé à un circuit de refroidissement dans lequel circule un liquide de refroidissement, ledit circuit de refroidissement étant configuré de sorte que, lorsque l'ensemble de piles à combustible fonctionne en libérant une chaleur, ladite chaleur réchauffe ledit liquide de refroidissement.

Selon un mode de réalisation particulier, une sortie dudit circuit de refroidissement est couplée à une entrée d'un échangeur de chaleur au travers duquel circule l'hydrogène alimentant ledit ensemble de piles à combustible de sorte qu'au moins une partie dudit liquide de refroidissement réchauffé circule dans ledit échangeur de chaleur et réchauffe l'hydrogène alimentant ledit ensemble de piles à combustible.

Selon un mode de réalisation particulier, une partie de l'hydrogène circulant au travers de l'échangeur de chaleur alimente ledit au moins un système de propulsion pendant une phase de démarrage.

Selon un mode de réalisation particulier, une unité de traitement dudit groupe auxiliaire de puissance est configurée pour obtenir des informations relatives aux besoins en air du système de contrôle environnemental et de l'ensemble de piles à combustible. L'unité de traitement contrôle également le distributeur d'air de sorte qu'il alimente en air l'ensemble de piles et le système de contrôle environnemental en fonction desdites informations obtenues.

Selon un mode de réalisation particulier, au moins une partie de l'air en sortie de l'ensemble de piles à combustible est injectée dans au moins un compartiment dudit au moins un système de propulsion.

Selon un mode de réalisation particulier, le groupe auxiliaire de puissance et ledit au moins un système de propulsion sont colocalisés.

Un aéronef comprenant au moins un groupe auxiliaire de puissance selon l'un quelconque des modes de réalisation précédents est décrit.

Un aéronef comprenant un premier groupe auxiliaire de puissance selon l'un quelconque des modes de réalisation précédents et un second groupe auxiliaire de puissance selon l'un quelconque des modes de réalisation précédents est décrit. Les premier et second groupes auxiliaires de puissance sont reliés par un système d'alimentation croisée.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'un aéronef selon un mode particulier de réalisation ;
[Fig. 2] est une représentation schématique d'un groupe auxiliaire de puissance selon un mode particulier de réalisation ; et
[Fig. 3] est une représentation schématique d'un ensemble de deux systèmes de propulsion, chaque système de propulsion étant associé à un groupe auxiliaire de puissance selon un mode particulier de réalisation.

### EXPOSE DETAILLE DE MODES DE REALISATION

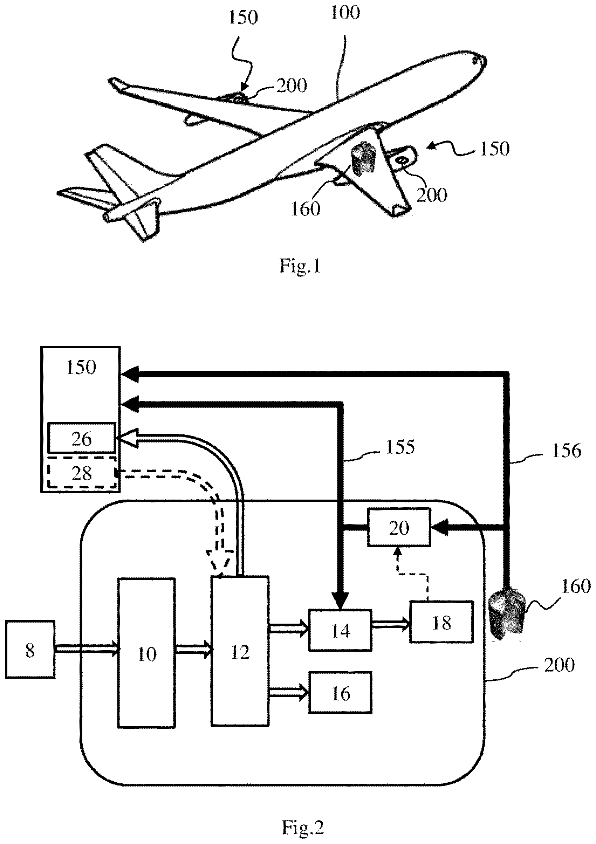

La Fig. 1 montre une vue en perspective d'un aéronef 100, qui présente un fuselage de part et d'autre duquel est fixée une aile. Sous chaque aile est fixé au moins un système de propulsion 150, e.g. un turboréacteur à double flux (« turbofan » en anglais) ou un turbopropulseur, alimenté en dihydrogène depuis un réservoir 160 par exemple localisé dans une des ailes. Sur la Fig. 1, l'aéronef 100 comprend deux systèmes de propulsion 150, un sous chaque aile. Dans un autre mode de réalisation, ils peuvent être au-dessus de l'aile. Chaque système de propulsion 150 est agencé et installé sur l'aéronef pour fournir une puissance de propulsion à l'aéronef 100. L'aéronef comprend en outre au moins un groupe auxiliaire de puissance 200 tel qu'illustré sur la Fig. 2. Le groupe auxiliaire de puissance 200 comprend notamment un ensemble 14 de piles à combustible (« Fuel Cell Stack » en anglais) alimenté en dihydrogène et en dioxygène et un système 16 de contrôle environnemental (« environmental control system » ou ECS en anglais) alimenté en dioxygène. Le groupe auxiliaire de puissance 200 est utilisé pour alimenter en énergies électrique et pneumatique des systèmes non propulsifs de l'aéronef (par exemple : l'éclairage, la ventilation d'une cabine passagers et/ou la climatisation de la cabine...) c'est-à-dire des équipements non liés à la propulsion de l'aéronef 100. Plus précisément, l'énergie électrique produite par l'ensemble 14 de piles à combustible est utilisée notamment pour l'éclairage et le contrôle cabine avant même le démarrage de l'aéronef. L'énergie pneumatique est utilisée notamment par le système de contrôle environnemental 16 pour la ventilation, la climatisation de la cabine de l'air, le contrôle de la température et la pressurisation de la cabine pour l'équipage et les passagers. Cette énergie pneumatique est également la principale source d'énergie utilisée pour le démarrage des systèmes de propulsion 150. Dans la suite, les termes oxygène et dioxygène sont utilisés de manière interchangeable. De même, les termes hydrogène et dihydrogène sont utilisés de manière interchangeable.

La **Fig. 2** est une représentation schématique d'un groupe auxiliaire de puissance 200 selon un mode particulier de réalisation. Sur cette Figure, les flèches épaisses noires sont relatives à un circuit de distribution d'hydrogène et les flèches épaisses blanches sont relatives à un circuit de distribution d'air, notamment d'oxygène.

Le groupe auxiliaire de puissance 200 comprend un compresseur 10, par exemple un compresseur électrique, couplé à un distributeur d'air 12 via au moins une conduite d'air. Le distributeur d'air, également connu sous la terminologie de collecteur, est configuré pour répartir le flux d'air qu'il reçoit en entrée vers plusieurs dispositifs en sortie. L'oxygène utilisé dans le groupe auxiliaire de puissance 200, e.g. par l'ensemble 14 de piles à combustible, provient par exemple de l'air ambiant pressurisé par le compresseur 10, l'air pressurisé servant à alimenter un distributeur d'air 12 (« manifold » en anglais). L'air ambiant provient par exemple d'un dispositif de prélèvement d'air 8 comprenant une ou plusieurs écopes situées à proximité du compresseur 10.

Le distributeur d'air 12 alimente à son tour en air donc en dioxygène l'ensemble 14 de piles à combustible et le système 16 de contrôle environnemental. En outre, le distributeur d'air 12 alimente en air sous pression un module 26 de démarrage du système de propulsion 150. Le système de contrôle environnemental 16 est un système classiquement utilisé dans un aéronef et son architecture interne n'est pas détaillée ici dans la mesure où celle-ci n'est pas utile à la compréhension de l'invention. Notamment, le système de contrôle environnemental 16 comprend une sortie d'air extérieure pour éjecter de l'air prélevé dans la cabine et le cockpit.

L'ensemble 14 de piles à combustible est, en outre, alimenté en hydrogène depuis le réservoir 160 au travers du circuit de distribution en dihydrogène.

Une pile à combustible est une pile dans laquelle la génération d'une tension électrique se fait grâce à l'oxydation sur une anode d'un combustible réducteur, ici le dihydrogène, couplée à la réduction sur une cathode d'un oxydant, ici le dioxygène de l'air. Le dioxygène est fourni par le distributeur d'air 12, e.g. à une pression de 2 bars. Les deux électrodes sont en contact avec une membrane, qui joue le rôle d'électrolyte, assurant ainsi le transport des ions produits à l'anode. En effet, l'oxydation du dihydrogène à l'anode produit des ions H⁺ et des électrons e⁻ qui passent de l'anode vers la cathode. Arrivé à l'anode, le dihydrogène (H₂) se dissocie (oxydation) en ions H⁺ et en électrons selon la réaction suivante : 2H₂ = 4H⁺ + 4e⁻. Les ions H⁺ migrent dans la membrane et les électrons passent par un circuit extérieur produisant ainsi de l'énergie électrique. À la cathode, les ions H⁺, les électrons e⁻, et du dioxygène (e.g. provenant de l'air) se rencontrent pour former de l'eau selon la réaction suivante : 4H⁺ + 4e⁻ + O₂ = 2H₂O. Lors de cette réaction, de la chaleur est libérée. L'air non utilisé par les piles à combustible lors de la réaction chimique est par exemple rejeté à l'extérieur de l'aéronef.

L'hydrogène est par exemple stocké sous forme liquide dans le réservoir 160 à la température de 20 kelvins et à la pression de 3 bars. L'hydrogène liquide est vaporisé à l'aide d'une capsule qui est en contact avec le réservoir 160. La capsule est une enceinte hermétique où règne le vide qui permet de réguler la pression et la température de l'hydrogène dans le circuit d'hydrogène. L'hydrogène non utilisé par les piles à combustible lors de la réaction chimique est renvoyé dans le circuit d'hydrogène. Sans sortir du cadre de l'invention, l'hydrogène peut aussi être stocké directement sous forme gazeuse dans le réservoir 160. Les piles à combustible sont refroidies par un circuit de refroidissement 18. En effet, les réactions chimiques dans les piles à combustible produisent de la chaleur qui doit être évacuée afin de ne pas surchauffer les piles. A cet effet, le circuit de refroidissement 18 est alimenté en liquide de refroidissement. Le liquide de refroidissement est par exemple un mélange d'eau et de glycol, e.g. de type EGW (acronyme anglais de « Ethylène Glycol Water»). La sortie du circuit de refroidissement 18 est couplée à l'entrée d'un échangeur de chaleur 20 afin d'évacuer la chaleur.

Au moins une partie de la chaleur produite sert à augmenter, au travers de l'échangeur de chaleur 20, la température de l'hydrogène en sortie du réservoir pour la porter à une valeur adéquate, e.g. de 200 à 350°K, adaptée au fonctionnement de l'ensemble 14 de piles à combustible. Grâce à l'hydrogène traversant l'échangeur de chaleur 20, le liquide de refroidissement en provenance des piles à combustible et circulant dans l'échangeur de chaleur 20 est refroidi alors que l'hydrogène se réchauffe.

Dans une variante, une partie de la chaleur produite est évacuée à l'extérieur de l'installation. Dans ce mode de réalisation, l'échangeur de chaleur 20 est également alimenté en air frais depuis l'extérieur par une ou plusieurs écopes au niveau de la peau extérieure de l'aéronef. Les écopes peuvent être réparties sur le périmètre de la peau extérieure et elles peuvent être par exemple du type NACA ou être du type affleurant par rapport à la peau extérieure. Grâce à l'air frais traversant l'échangeur de chaleur 20, le liquide de refroidissement en provenance des piles à combustible et circulant dans l'échangeur de chaleur 20 est refroidi alors que l'air frais se réchauffe. L'échangeur de chaleur 20 rejette alors l'air chaud à l'extérieur de l'aéronef par exemple à travers une tuyère d'éjection. Selon un mode de réalisation, l'échangeur de chaleur est disposé dans un conduit d'air dynamique (« ram air duct » en anglais) de l'aéronef.

Le fonctionnement des différents éléments du groupe auxiliaire de puissance 200 est contrôlé par une unité de traitement (non représentée sur la Fig.2). Les échanges d'information avec cette unité de traitement peuvent se faire en utilisant un réseau interne à l'aéronef ou un bus de communication dédié. Par ailleurs, les différents circuits de distribution en air et en hydrogène comprennent classiquement des pompes et des valves (non représentées sur la Fig.2) également contrôlées par l'unité de traitement.

Le système de propulsion 150 fonctionne également à l'hydrogène. Dans un exemple de réalisation, le système de propulsion 150 est un système de propulsion à combustion d'hydrogène.

De l'hydrogène issu de l'échangeur de chaleur 20 est envoyé vers le moteur 150 par une canalisation 155 pour alimenter le moteur en hydrogène pendant une phase de démarrage. A cet effet, l'hydrogène est évaporé par chauffage au moyen de l'échangeur de chaleur 20. Autrement dit, la chaleur générée par l'ensemble 14 de piles à combustible est avantageusement utilisée pour réchauffer l'hydrogène alimentant le système de propulsion 150 au travers de l'échangeur de chaleur 20. Ainsi, le fait d'avoir l'ensemble 14 de piles à combustible colocalisé avec l'échangeur de chaleur 20 et le système de propulsion 150 permet de minimiser les pertes de chaleur. Le terme colocalisé est à comprendre comme signifiant une proximité spatiale de l'ensemble 14 de piles à combustible et du système de propulsion 150 (respectivement de l'échangeur de chaleur 20).

D'autre part, une canalisation 156 permet d'envoyer de l'hydrogène issu du réservoir 160 vers le moteur 150 pendant le fonctionnement du moteur, c'est-à-dire après son démarrage. Dans un mode de réalisation particulier, dans lequel le ou les systèmes de propulsion 150 sont en fonctionnement, le distributeur d'air 12 est contrôlé par l'unité de traitement pour fournir à l'ensemble 14 de piles à combustible et au système 16 de contrôle environnemental un mélange d'air en provenance du compresseur 10 et du ou des systèmes de propulsion 150. Un tel prélèvement d'air au niveau du ou des systèmes de propulsion 150 est effectué par un système de prélèvement d'air 28 connu sous la terminologie anglaise de « bleed air system ». A cet effet, une entrée du distributeur d'air 12 est couplée à une sortie du système de prélèvement d'air 28. Ce mode de réalisation permet d'utiliser l'énergie du système de propulsion 150, et donc d'éteindre le compresseur 10. Il permet également de pallier la panne de l'une ou l'autre des sources d'air pressurisé.

Dans un mode de réalisation particulier, l'unité de traitement obtient des informations relatives aux besoins en air du système 16 de contrôle environnemental et de l'ensemble 14 de piles. En effet, les besoins en air peuvent varier au cours du temps. Par exemple, les besoins du système de contrôle environnemental 16 peuvent varier en fonction de l'altitude de vol, la température extérieure et du nombre de passagers à bord de l'aéronef. L'unité de traitement contrôle le distributeur de sorte qu'il alimente l'ensemble 14 de piles et le système de contrôle environnemental en fonction des informations obtenues relatives à leurs besoins respectifs en air.

Dans un mode de réalisation particulier, l'air ou une partie de l'air en sortie de l'ensemble de piles qui est appauvri en oxygène est transmis aux systèmes de propulsion 150 afin de servir de barrière anti-feu. Notamment, cet air appauvri en oxygène peut être avantageusement injecté dans des compartiments des systèmes de propulsion 150 dans lesquels une fuite d'hydrogène est susceptible de se produire et ainsi limiter les risques d'explosion.

Dans un mode de réalisation particulier, l'ensemble 14 de piles à combustible des Figs 1 et 2 est avantageusement couplé à un système de stockage d'énergie électrique comprenant des batteries et/ou des condensateurs.

Dans un mode de réalisation particulier, le groupe auxiliaire de puissance 200 et le système de propulsion 150 auquel il est associé sont colocalisés, i.e. sont proches spatialement. Ainsi, le groupe auxiliaire de puissance n'est plus situé dans la queue de l'aéronef, ce qui permet d'éviter d'avoir à transporter de l'hydrogène dans un circuit de distribution le long de l'aéronef et ainsi limite les risques de fuite et donc d'explosion.

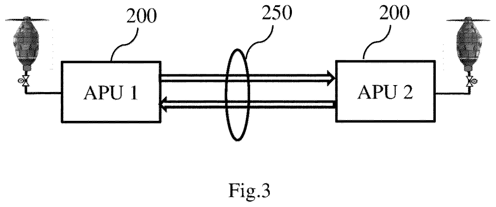

Dans une variante de réalisation représentée sur la **Fig. 3****,** l'aéronef comprend autant de groupes auxiliaires de puissance que de systèmes de propulsion 150, chaque groupe auxiliaire de puissance et le système de propulsion auquel il est associé étant colocalisés. Dans cette variante, les groupes auxiliaires de puissances sont reliés par un système d'alimentation croisée 250 (« crossfeed » en anglais) afin de pallier un éventuel dysfonctionnement d'au moins un élément d'un groupe auxiliaire de puissance parmi le compresseur 10, le distributeur d'air 12, l'échangeur de chaleur 20 ou 22 et/ou le système de prélèvement d'air 28.

Ce système d'alimentation croisée 250 est contrôlé par une unité de traitement. L'unité de traitement est configurée pour détecter un dysfonctionnement d'au moins un élément d'un groupe auxiliaire de puissance et pour pallier le problème en fonction de l'élément dysfonctionnel. Par exemple, en cas de dysfonctionnement du compresseur et/ou du distributeur du groupe auxiliaire de puissance APU 1, l'unité de traitement met en oeuvre une distribution d'air du système de contrôle environnemental et de l'ensemble de piles à combustible du groupe auxiliaire de puissance APU 1 depuis le compresseur et le distributeur du groupe auxiliaire de puissance APU 2. Dit autrement, le système de contrôle environnemental et l'ensemble de piles à combustible du groupe auxiliaire de puissance APU 1 sont alimentés en air par le distributeur du groupe auxiliaire de puissance APU 2. Ainsi, le système global est résistant aux dysfonctionnements d'au moins un élément d'un groupe auxiliaire de puissance grâce à l'utilisation en remplacement de l'élément correspondant dans l'autre groupe auxiliaire de puissance. Cette solution garantit donc la disponibilité de fonctions critiques (e.g. air conditionné, électricité, etc). Dans un mode de réalisation, l'unité de traitement contrôlant le système d'alimentation croisée 250 correspond à l'unité de traitement contrôlant le distributeur d'air 12 du premier groupe auxiliaire de puissance ou à l'unité de traitement contrôlant le distributeur d'air 12 du second groupe auxiliaire de puissance. Dans un autre mode de réalisation, l'unité de traitement contrôlant le système d'alimentation croisée 250 est indépendante de l'unité de traitement contrôlant le distributeur d'air 12 du premier groupe auxiliaire de puissance et de l'unité de traitement contrôlant le distributeur d'air 12 du second groupe auxiliaire de puissance. Elle peut toutefois échanger des informations avec ces deux unités de traitement. Dans encore un autre mode de réalisation, l'unité de traitement contrôlant le système d'alimentation croisée 250, l'unité de traitement contrôlant le distributeur d'air 12 du premier groupe auxiliaire de puissance et l'unité de traitement contrôlant le distributeur d'air 12 du second groupe auxiliaire de puissance correspondent à une même unité de traitement.

## Revendications

1. Un groupe auxiliaire de puissance pour un aéronef (100) comprenant un compresseur d'air (10) couplé à un dispositif de prélèvement d'air (8) à l'extérieur de l'aéronef, ledit compresseur (10) alimentant en air comprimé un distributeur d'air (12) configuré pour alimenter en air un système de contrôle environnemental (16) et un module (26) de démarrage d'au moins un système de propulsion (150) de l'aéronef alimenté en hydrogène depuis un réservoir (160) où :
- ledit distributeur d'air (12) est en outre configuré pour alimenter en air un ensemble de piles à combustible (14) agencé pour réaliser une fonction de génération électrique destinée à alimenter des systèmes non propulsifs de l'aéronef (100), ledit ensemble de piles à combustible (14) étant en outre alimenté en hydrogène depuis ledit réservoir (160) ; ledit groupe auxiliaire étant **caractérisé en ce que**:
- une entrée dudit distributeur d'air (12) est couplée à une sortie d'un système de prélèvement d'air (28) configuré pour prélever de l'air au niveau dudit au moins un système de propulsion (150) et le distributeur d'air est contrôlé par une unité de traitement de sorte que, lorsque ledit système de propulsion (150) fonctionne, le distributeur d'air (12) alimente l'ensemble de piles à combustible (14) et le système de contrôle environnemental (16) d'un mélange d'air en provenance du compresseur (10) et du système de propulsion (150).

2. Le groupe auxiliaire de puissance selon la revendication 1, dans lequel l'unité de traitement est en outre configurée pour commander l'arrêt du compresseur (10) pendant le fonctionnement du système de propulsion (150).

3. Le groupe auxiliaire de puissance selon l'une des revendications 1 ou 2, dans lequel l'ensemble de piles à combustible (14) est couplé à un circuit de refroidissement (18) dans lequel circule un liquide de refroidissement, ledit circuit de refroidissement (18) étant configuré de sorte que, lorsque l'ensemble de piles à combustible fonctionne en libérant une chaleur, ladite chaleur réchauffe ledit liquide de refroidissement.

4. Le groupe auxiliaire de puissance selon la revendication 3, dans lequel une sortie dudit circuit de refroidissement (18) est couplée à une entrée d'un échangeur de chaleur (20) au travers duquel circule l'hydrogène alimentant ledit ensemble de piles à combustible (14) de sorte qu'au moins une partie dudit liquide de refroidissement réchauffé circule dans ledit échangeur de chaleur et réchauffe l'hydrogène alimentant ledit ensemble de piles à combustible (14).

5. Le groupe auxiliaire de puissance selon la revendication 3 ou 4, dans lequel une partie de l'hydrogène circulant au travers de l'échangeur de chaleur alimente ledit au moins un système de propulsion pendant une phase de démarrage.

6. Le groupe auxiliaire de puissance selon l'une des revendication 1 à 5, dans lequel une unité de traitement dudit groupe auxiliaire de puissance est configurée pour obtenir des informations relatives aux besoins en air du système de contrôle environnemental et de l'ensemble de piles à combustible et dans lequel ladite unité de traitement contrôle le distributeur d'air de sorte qu'il alimente en air l'ensemble de piles et le système de contrôle environnemental en fonction desdites informations obtenues.

7. Le groupe auxiliaire de puissance selon l'une des revendications 1 à 6, dans lequel au moins une partie de l'air appauvri en oxygène en sortie de l'ensemble de piles à combustible est injecté dans au moins un compartiment dudit au moins un système de propulsion afin de servir de barrière anti-feu.

8. Le groupe auxiliaire de puissance selon l'une des revendications 1 à 7, ledit groupe auxiliaire de puissance et ledit au moins un système de propulsion étant colocalisés.

9. Un aéronef comprenant au moins un groupe auxiliaire de puissance selon l'une quelconque des revendications 1 à 8.

10. Un aéronef comprenant :
- un premier groupe auxiliaire de puissance selon l'une quelconque des revendications 1 à 8 et un second groupe auxiliaire de puissance selon l'une quelconque des revendications 1 à 8, lesdits premier et second groupes auxiliaires de puissance étant reliés par un système d'alimentation croisée ; et
- une unité de traitement configurée pour détecter un dysfonctionnement d'au moins un élément de l'un du premier ou du second groupe auxiliaire de puissance et pour pallier ce dysfonctionnement en commandant le système d'alimentation croisée de façon à utiliser l'élément correspondant dans l'autre groupe auxiliaire de puissance en remplacement de l'élément objet du dysfonctionnement.

## Patentansprüche

1. Hilfstriebwerk für ein Flugzeug (100), beinhaltend einen Luftkompressor (10), der mit einer Vorrichtung zur Entnahme von Luft (8) auf der Außenseite des Flugzeugs gekoppelt ist, wobei der Kompressor (10) einen Luftverteiler (12) mit Druckluft versorgt, welcher dazu konfiguriert ist, eine Klimaanlage (16) und ein Startmodul (26) für mindestens ein Antriebssystem (150) des Flugzeugs, das von einem Behälter (160) aus mit Wasserstoff versorgt wird, mit Luft zu versorgen, wobei:
- der Luftverteiler (12) ferner dazu konfiguriert ist, eine Anordnung von Brennstoffzellen (14) mit Luft zu versorgen, welche dazu angeordnet ist, eine Stromerzeugungsfunktion durchzuführen, die dazu bestimmt ist, Nicht-Antriebssysteme des Flugzeugs (100) zu versorgen, wobei die Anordnung von Brennstoffzellen (14) ferner von dem Behälter (160) aus mit Wasserstoff versorgt wird; wobei das Hilfstriebwerk **dadurch gekennzeichnet ist, dass**:
- ein Eingang des Luftverteilers (12) mit einem Ausgang eines Luftentnahmesystems (28) gekoppelt ist, welches dazu konfiguriert ist, Luft im Bereich des mindestens einen Antriebssystems (150) zu entnehmen, und der Luftverteiler durch eine Verarbeitungseinheit derart gesteuert wird, dass, wenn das Antriebssystem (150) in Betrieb ist, der Luftverteiler (12) die Anordnung von Brennstoffzellen (14) und die Klimaanlage (16) mit einem Luftgemisch versorgt, das von dem Kompressor (10) und dem Antriebssystem (150) kommt.

2. Hilfstriebwerk nach Anspruch 1, wobei die Verarbeitungseinheit ferner dazu konfiguriert ist, während des Betriebs des Antriebssystems (150) das Stoppen des Kompressors (10) anzusteuern.

3. Hilfstriebwerk nach einem der Ansprüche 1 oder 2, wobei die Anordnung von Brennstoffzellen (14) mit einem Kühlkreislauf (18) gekoppelt ist, in dem eine Kühlflüssigkeit zirkuliert, wobei der Kühlkreislauf (18) derart konfiguriert ist, dass, wenn die Anordnung von Brennstoffzellen in Betrieb ist und dabei Wärme freisetzt, die Wärme die Kühlflüssigkeit erwärmt.

4. Hilfstriebwerk nach Anspruch 3, wobei ein Ausgang des Kühlkreislaufs (18) mit einem Eingang eines Wärmetauschers (20) gekoppelt ist, durch welchen der Wasserstoff zirkuliert, der die Anordnung von Brennstoffzellen (14) versorgt, sodass mindestens ein Teil der erwärmten Kühlflüssigkeit in dem Wärmetauscher zirkuliert und den Wasserstoff erwärmt, der die Anordnung von Brennstoffzellen (14) versorgt.

5. Hilfstriebwerk nach Anspruch 3 oder 4, wobei ein Teil des Wasserstoffs, der durch den Wärmetauscher zirkuliert, während einer Startphase das mindestens eine Antriebssystem versorgt.

6. Hilfstriebwerk nach einem der Ansprüche 1 bis 5, wobei eine Verarbeitungseinheit des Hilfstriebwerks dazu konfiguriert ist, Informationen über den Luftbedarf der Klimaanlage und der Anordnung von Brennstoffzellen zu erhalten, und wobei die Verarbeitungseinheit den Luftverteiler derart steuert, dass dieser die Anordnung von Brennstoffzellen und die Klimaanlage in Abhängigkeit von den erhaltenen Informationen mit Luft versorgt.

7. Hilfstriebwerk nach einem der Ansprüche 1 bis 6, wobei mindestens ein Teil der sauerstoffarmen Luft am Ausgang der Anordnung von Brennstoffzellen in mindestens eine Kammer des mindestens einen Antriebssystems gespritzt wird, um als Brandschutzbarriere zu dienen.

8. Hilfstriebwerk nach einem der Ansprüche 1 bis 7, wobei das Hilfstriebwerk und das mindestens eine Antriebssystem kolokalisiert sind.

9. Flugzeug, das mindestens ein Hilfstriebwerk nach einem der Ansprüche 1 bis 8 beinhaltet.

10. Flugzeug, beinhaltend:
- ein erstes Hilfstriebwerk nach einem der Ansprüche 1 bis 8 und ein zweites Hilfstriebwerk nach einem der Ansprüche 1 bis 8, wobei das erste und das zweite Hilfstriebwerk durch ein Überkreuzversorgungssystem verbunden sind; und
- eine Verarbeitungseinheit, die dazu konfiguriert ist, eine Fehlfunktion mindestens eines Elements von einem von dem ersten oder dem zweiten Hilfstriebwerk zu detektieren und diese Fehlfunktion dadurch aufzufangen, dass sie das Überkreuzversorgungssystem so ansteuert, dass das entsprechende Element in dem anderen Hilfstriebwerk als Ersatz für das von der Fehlfunktion betroffene Element verwendet wird.

## Claims

1. Auxiliary power unit for an aircraft (100), comprising an air compressor (10) coupled to an air-drawing device (8) for drawing in air from outside the aircraft, said compressor (10) supplying compressed air to a manifold (12) configured to supply air to an environmental control system (16) and a start-up module (26) of at least one propulsion system (150) of the aircraft, said propulsion system being supplied with hydrogen from a tank (160), wherein:
- said manifold (12) is also configured to supply air to a fuel cell stack (14) arranged so as to provide an electric generation function intended to power non-propulsive systems of the aircraft (100), said fuel cell stack (14) also being supplied with hydrogen from said tank (160); said auxiliary unit being **characterized in that**:
- an inlet of said manifold (12) is coupled to an outlet of a bleed air system (28) configured to draw in air from said at least one propulsion system (150), and the manifold is controlled by a processing unit such that, when said propulsion system (150) is operating, the manifold (12) supplies the fuel cell stack (14) and the environmental control system (16) with a mixture of air coming from the compressor (10) and from the propulsion system (150).

2. Auxiliary power unit according to Claim 1, wherein the processing unit is also configured to command the stoppage of the compressor (10) during operation of the propulsion system (150).

3. Auxiliary power unit according to either of Claims 1 and 2, wherein the fuel cell stack (14) is coupled to a cooling circuit (18) in which a cooling liquid circulates, said cooling circuit (18) being configured such that, when the fuel cell stack is operating with release of heat, said heat heats said cooling liquid.

4. Auxiliary power unit according to Claim 3, wherein an outlet of said cooling circuit (18) is coupled to an inlet of a heat exchanger (20), through which the hydrogen supplying said fuel cell stack (14) circulates, such that at least a portion of said heated cooling liquid circulates in said heat exchanger and heats the hydrogen supplying said fuel cell stack (14).

5. Auxiliary power unit according to Claim 3 or 4, wherein a portion of the hydrogen circulating through the heat exchanger supplies said at least one propulsion system during a start-up phase.

6. Auxiliary power unit according to one of Claims 1 to 5, wherein a processing unit of said auxiliary power unit is configured to obtain information relating to the air requirements of the environmental control system and of the fuel cell stack, and wherein said processing unit controls the manifold such that it supplies air to the cell stack and the environmental control system as a function of said obtained information.

7. Auxiliary power unit according to one of Claims 1 to 6, wherein at least a portion of the oxygen-depleted air at the outlet of the fuel cell stack is injected into at least one compartment of said at least one propulsion system in order to serve as a fire barrier.

8. Auxiliary power unit according to one of Claims 1 to 7, said auxiliary power unit and said at least one propulsion system being co-located.

9. Aircraft comprising at least one auxiliary power unit according to any one of Claims 1 to 8.

10. Aircraft comprising:
- a first auxiliary power unit according to any one of Claims 1 to 8 and a second auxiliary power unit according to any one of Claims 1 to 8, said first and second auxiliary power units being connected by a cross-feed system; and
- a processing unit configured to detect a malfunction of at least one element of one of the first or the second auxiliary power unit and to compensate for this malfunction by commanding the cross-feed system in such a way as to use the corresponding element in the other auxiliary power unit as a replacement for the malfunctioning element.
